Europäisches Patentamt

European Patent Office

Office européen des brevets

(19)

(11) **EP 1 557 092 A1**

(12) **EUROPEAN PATENT APPLICATION**

(43) Date of publication:
27.07.2005 Bulletin 2005/30

(51) Int Cl.⁷: **A23G 9/00**, A23G 9/28

(21) Application number: **04257806.2**

(22) Date of filing: **15.12.2004**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **20.01.2004 EP 04250280**

(71) Applicants:
• **UNILEVER PLC**
**London EC4P 4BQ (GB)**
Designated Contracting States:
**CY IE GB**
• **UNILEVER N.V.**
**3013 AL Rotterdam (NL)**
Designated Contracting States:
**IS SK SI BG PT CZ LT EE BE DE NL MC RO DK ES AT SE TR PL CH LI FI FR HU GR LU IT**

(72) Inventors:
• **Evans, Victoria Suzanne Elizabeth**
**Bedfordshire, MK44 1LQ (GB)**
• **Heredero, Conchita**
**08018 Barcelona (ES)**
• **Paesano, Anna**
**00143 Rome (IT)**

(74) Representative: **Hugot, Alain Eric Philippe et al**
**Unilever Intellectual Property Group**
**Colworth House**
**Sharnbrook**
**Bedford MK44 1LQ (GB)**

(54) **Frozen edible product**

(57) In a frozen edible product in a cartridge, the cartridge comprises a hollow body (1) with a bore and two ends, of which one end is open and the other end is closed by an end wall (5,6) containing a dispensing aperture (7) through which the frozen edible product is dispensed, the hollow body (1), the end wall (5, 6) and the open end delimiting a cavity wherein a frozen aerated product (8) is located; and at least one food inclusion (9), distinct from the frozen aerated product (8), is located in the cavity, said food inclusion representing between 5%, and 20% of the volume of the cavity.

**Description**

**Technical field of the invention**

The present invention refers to a frozen edible product. The present invention most particularly relates to a frozen edible product in a cartridge.

**Background to the invention**

Conventional soft ice is dispensed from a semi-continuous, pressurised scraped surface heat exchanger (SSHE) at temperatures of -4 to -9°C. The rheology of ice cream and the shear provided by the SSHE are such that a pressure of a few atmospheres is sufficient to dispense the ice cream at an acceptable rate. Unfortunately, SSHEs are large and expensive, require power, training to operate, do not deliver consistent product quality if used over a period of time & are difficult to dismantle & clean for the operator. Each SSHE can also only offer one type of product (e.g. flavour/ice cream/sorbet etc) at a time - separate barrels are required for different products.

These pre-existing systems are expensive, characterised by a slow rate of dispensing, a narrow range of product, a lack of consistency in portion control and deterioration of bulk product not used.

Frozen aerated products in cartridges have therefore been proposed and are for example described in EP995685. They are constituted by an ice cream product in a cartridge, the cartridge comprising a hollow body which is open at one end and closed by an end wall at the other end, a dispensing aperture in the end wall through which the frozen product is dispensed and a plunger which sealingly fits within the bore of the hollow body and which is movable within the bore of the body towards the end wall. The hollow body, the end wall and the plunger delimit a cavity wherein a frozen aerated product is located.

These products in individual cartridges allow for the delivery of individual doses of a wide range of flavours at a single point of sale without further requiring the use of SSHE. They are already constituting a very significant breakthrough.

There is a need for extending the range of ice cream products which can be delivered through such systems, particularly by adding sauces to said products and by creating new products which could not before be produced using SSHE systems.

**Tests and definitions**

Overrun

Overrun is defined by the following equation

$$OR = \frac{volume..of..ice..cream - volume..of .. premix..at..ambient..temp}{volume..of .. premix..at..ambient..temp} \times 100$$

It is measured at atmospheric pressure.

**Brief description of the invention**

It is the object of the present invention to provide a frozen edible product in a cartridge,

- the cartridge comprising a hollow body with a bore and two ends, of which one end is open and the other end is closed by an end wall containing a dispensing aperture through which the frozen edible product is dispensed
- the hollow body, the end wall and the open end delimiting a cavity wherein a frozen aerated product is located,

characterised in that at least one food inclusion, distinct from the frozen aerated product, is located in the cavity, said food inclusion representing between 5%, and 20% of the volume of the cavity.

Preferably, said food inclusion represents less than 15% of volume of the cavity. Preferably also said food inclusion represents at least 8% of the volume of said cavity.

Preferably said cartridge further comprises a plunger which sealingly fits within the bore of the hollow body and which is movable within the bore of the body towards the end wall.

Preferably, in the frozen edible product in a cartridge according to the invention, the food inclusion is situated between the plunger and the frozen aerated product. More preferably, the food inclusion is situated in a well in the frozen aerated product, this well being located at an end of the frozen aerated product facing the plunger.

In an alternative preferred embodiment of the invention, the food inclusion is situated inside the frozen aerated product.

Preferably, the dispensing aperture is covered prior to use by a removable seal.

Preferably also, the hollow body is cylindrical. In an alternative preferred embodiment the hollow body is frusto-conical.

The food inclusion can be of a viscosity lower than, equal to or higher than the viscosity of the frozen aerated product.

The food inclusion can be a single substance of uniform composition or a mixture of different substances, such as a chocolate sauce containing pieces of nuts.

## Detailed description of the invention

The present invention will be further described with reference to the drawings wherein

Figure 1 represents a cross section of a cartridge filled with a frozen product, according to the invention,

Figure 2 represents a cross section of a preferred cartridge filled with a frozen product, according to the invention,

Figure 3 represents a cross section of another preferred cartridge filled with a frozen product, according to the invention,

Figure 4,5 and 6 each represent a cross section of a frozen product in a cup, after extrusion from cartridges according to figures 1, 2 and 3 respectively.

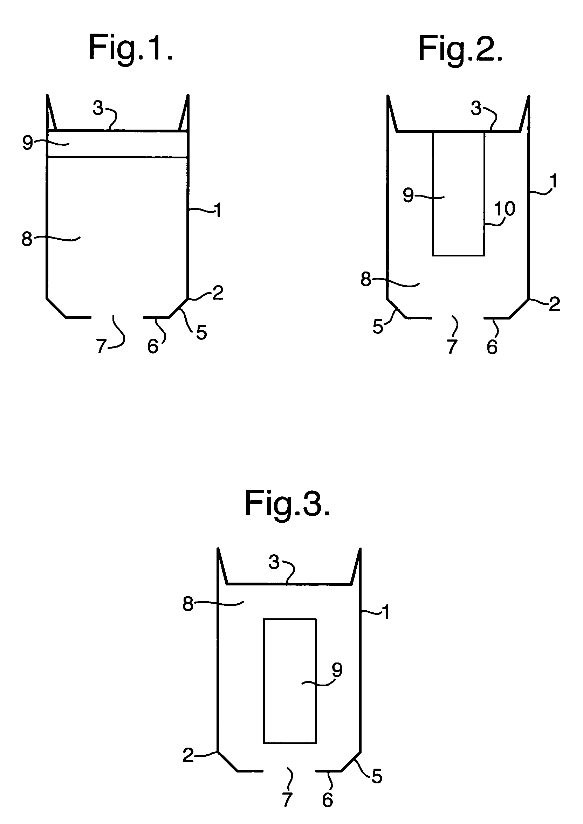

As illustrated on Figure 1, a cartridge has a hollow cylindrical body (1) defining a cavity of capacity suitable for a mass of frozen confection it is to contain. The frozen confection is constituted by a frozen aerated product (such as ice cream) (8) and a food inclusion (9). The hollow cylindrical body (1) is open at one end and closed at the other end by an end wall comprising a truncated conical section (5) extending from the cylindrical body and a flat circular section (6) having a dispensing aperture (7). The larger circular base of the conical section (5) is directly attached, or is formed integrally with, the end (2) of the cylindrical body (1). A plunger (3) is in sealing fit inside the bore of the cylindrical body and is movable within the bore of the cylindrical body towards the end wall so as to urge the frozen confection towards the dispensing aperture (7) so that it can be extruded through the dispensing aperture (7). The plunger (3), besides being one of the elements for sealing the pack during its storage and handling from the place of packing to the time of its consumption, is designed to receive the action of a piston of a dispensing machine when it is required to dispense the product.

In Figure 1, the frozen aerated product (8) is located at the bottom of the cartridge, the bottom being defined by where the dispensing aperture (7) is located. The food inclusion (9) is located between the plunger (3) and the frozen aerated product (8) .

As can be seen on Figure 2, in a preferred embodiment of the invention, the frozen aerated product (8) extends over the whole height of the cavity delimited by the hollow body (1), the plunger (3) and the end wall. A well (10) is provided at a surface of the frozen aerated product touching the plunger (3). It is in this well (10) that the food inclusion (9) is located.

As can be seen on Figure 3, in another preferred embodiment of the invention, the food inclusion (9) is fully situated within the frozen aerated product (8).

Each cartridge for each embodiment represented on figures 1, 2 and 3 was filled with identical frozen aerated products (ice cream) but with three different food inclusions. One, was a typical sauce with a viscosity lower than the viscosity of the ice cream. One was an ice cream of a viscosity similar to the viscosity of the main ice cream. One was a chocolate truffle of a higher viscosity than the viscosity of the ice cream.

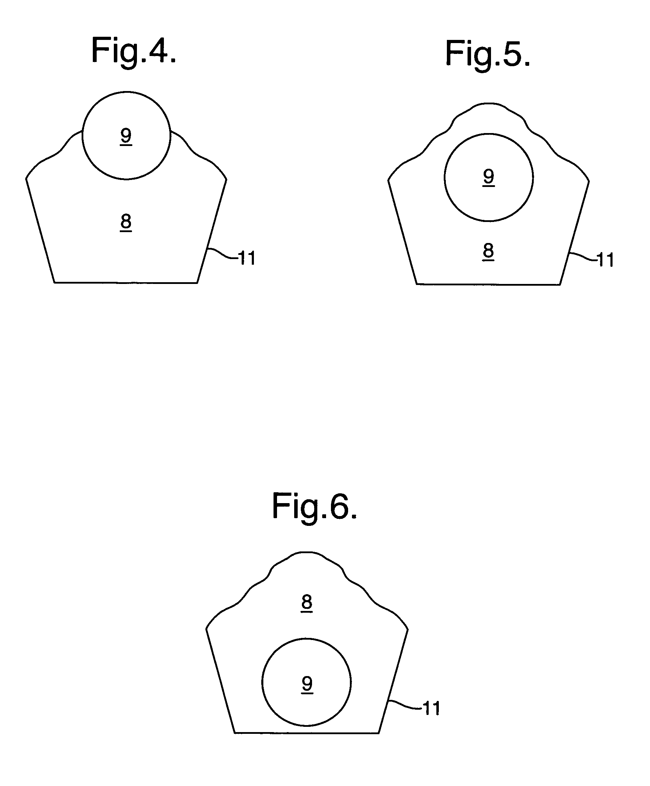

The extrusion of three cartridges according to figure 1 filled with the three different inclusions all lead to similar products as disclosed in figure 4.

The extrusion of three cartridges according to figure 2 filled with the three different inclusions all lead to similar products as disclosed in figure 5.

The extrusion of three cartridges according to figure 3 filled with the three different inclusions all lead to similar products as disclosed in figure 6.

It therefore surprisingly shows that the end product depends on the location of the inclusion in the original cartridge but not on the viscosity of the inclusion.

When a frozen edible product in a cartridge according to the invention as can be seen in Figure 3 is placed on a dispenser not represented, a pressure is exerted on the plunger (3) and the frozen aerated product starts flowing into a wafer cone or a cup (11) shown in Figure 6. Owing to the laminar nature of the flow, the inclusion (9) channels through the frozen aerated product (8) and ends up flowing through the dispensing aperture (7) before the whole of the ice cream has been dispensed. The continued pressure exerted on the plunger then causes the remaining frozen aerated product to be dispensed through aperture (7), resulting into a product as described on Figure 6.

**Claims**

1. A frozen edible product in a cartridge,

   - the cartridge comprising a hollow body (1) with a bore and two ends, of which one end is open and the other end is closed by an end wall (5,6) containing a dispensing aperture (7) through which the frozen edible product is dispensed
   - the hollow body (1), the end wall (5, 6) and the open end delimiting a cavity wherein a frozen aerated product (8) is located,

   **characterised in that** at least one food inclusion (9), distinct from the frozen aerated product (8), is located in the cavity, said food inclusion representing between 5%, and 20% of the volume of the cavity.

2. A frozen edible product in a cartridge according to claim 1, in which the cartridge further comprises a plunger (3) which sealingly fits within the bore of the hollow body (1) and which is movable within the bore of the body (1) towards the end wall (5,6).

3. A frozen edible product in a cartridge according to claim 1 or 2 **characterised in that** the food inclusion (9) is situated between the plunger (3) and the frozen aerated product (8).

4. A frozen edible product in a cartridge according to claim 3
   **characterised in that** the food inclusion is situated in a well (10) in the frozen aerated product (8), this well being located at an end of the frozen aerated product facing the plunger (3).

5. A frozen edible product in a cartridge according to claim 1 or 2 **characterised in that** the food inclusion (9) is situated inside the frozen aerated product (8).

6. A frozen product according to claim 1, 2, 3, 4 or 5 wherein the dispensing aperture is covered prior to use by a removable seal.

7. A frozen product according to claim 1, 2, 3, 4 or 5 wherein the hollow body is cylindrical.

8. A frozen product according to claim 1, 2, 3, 4 or 5 wherein the hollow body is frusto-conical.

# Fig.1.

# Fig.2.

# Fig.3.

Fig.4.

9

8

11

Fig.5.

9

8

11

Fig.6.

8

9

11

**European Patent Office**

## EUROPEAN SEARCH REPORT

Application Number

EP 04 25 7806

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 01/30176 A (MCGILL SHANE ROBERT ; MCGILL TECHNOLOGY LTD (GB)) 3 May 2001 (2001-05-03) | 1-6 | A23G9/00 A23G9/28 |
| Y | * page 1, line 18 - page 3, line 2 * * page 11, line 1 - line 8 * ----- | 7,8 | |
| Y | WO 01/19205 A (OLIVERAS PICO JAUME ; HUNTER JEFFREY (GB); UNILEVER PLC (GB); LEVER HI) 22 March 2001 (2001-03-22) | 7,8 | |
| A | * page 5, line 14 - line 28; claim 1; figures 1,2 * ----- | 1,2 | |
| A | EP 0 314 209 A (BRAVO SPA) 3 May 1989 (1989-05-03) * abstract; claims * ----- | 1-8 | |
| D,A | EP 0 995 685 A (WELLS, ANDREW MICHAEL; EZEE WHIP DISPENSING SYSTEMS LIMITED) 26 April 2000 (2000-04-26) * abstract; figures 1,2 * ----- | 1,2,8 | |
| A | DE 199 09 886 A (MZO OLDENBURGER MILCH EG) 7 September 2000 (2000-09-07) * column 1, line 56 - column 2, line 31 * ----- | | TECHNICAL FIELDS SEARCHED (Int.Cl.7) A23G |
| A | WO 98/04149 A (UNILEVER PLC; UNILEVER N.V) 5 February 1998 (1998-02-05) * abstract; claims * ----- | 1 | |

The present search report has been drawn up for all claims

| Place of search | Date of completion of the search | Examiner |
|---|---|---|
| Munich | 2 May 2005 | Gaiser, M |

**ANNEX TO THE EUROPEAN SEARCH REPORT
ON EUROPEAN PATENT APPLICATION NO.**

EP 04 25 7806

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2005

| Patent document cited in search report | | Publication date | Patent family member(s) | | Publication date |
|---|---|---|---|---|---|
| WO 0130176 | A | 03-05-2001 | AU | 7674900 A | 08-05-2001 |
| | | | CA | 2385716 A1 | 03-05-2001 |
| | | | EP | 1223816 A1 | 24-07-2002 |
| | | | WO | 0130176 A1 | 03-05-2001 |
| | | | JP | 2003512066 T | 02-04-2003 |
| | | | US | 6712236 B1 | 30-03-2004 |
| WO 0119205 | A | 22-03-2001 | ES | 2164556 A1 | 16-02-2002 |
| | | | AT | 256398 T | 15-01-2004 |
| | | | AU | 772165 B2 | 08-04-2004 |
| | | | AU | 7650800 A | 17-04-2001 |
| | | | BR | 0013974 A | 07-05-2002 |
| | | | CA | 2382624 A1 | 22-03-2001 |
| | | | DE | 20023316 U1 | 09-10-2003 |
| | | | DE | 60007332 D1 | 29-01-2004 |
| | | | DE | 60007332 T2 | 09-06-2004 |
| | | | WO | 0119205 A1 | 22-03-2001 |
| | | | EP | 1211950 A1 | 12-06-2002 |
| | | | ES | 2195799 T1 | 16-12-2003 |
| | | | PT | 1211950 T | 31-05-2004 |
| | | | TR | 200201485 T2 | 21-11-2002 |
| | | | ZA | 200201994 A | 11-03-2003 |
| EP 0314209 | A | 03-05-1989 | IT | 1232928 B | 10-03-1992 |
| | | | EP | 0314209 A2 | 03-05-1989 |
| | | | JP | 1160456 A | 23-06-1989 |
| EP 0995685 | A | 26-04-2000 | EP | 0995685 A1 | 26-04-2000 |
| | | | AT | 237508 T | 15-05-2003 |
| | | | DE | 69813562 D1 | 22-05-2003 |
| | | | ES | 2197409 T3 | 01-01-2004 |
| DE 19909886 | A | 07-09-2000 | DE | 19909886 A1 | 07-09-2000 |
| WO 9804149 | A | 05-02-1998 | AU | 713953 B2 | 16-12-1999 |
| | | | AU | 3940197 A | 20-02-1998 |
| | | | BR | 9710593 A | 04-12-2001 |
| | | | CA | 2261800 A1 | 05-02-1998 |
| | | | CN | 1231579 A ,C | 13-10-1999 |
| | | | CZ | 9900259 A3 | 17-11-1999 |
| | | | DE | 19781893 D2 | 15-07-1999 |
| | | | WO | 9804149 A1 | 05-02-1998 |
| | | | GB | 2331003 A ,B | 12-05-1999 |
| | | | IL | 128241 A | 10-02-2002 |
| | | | PL | 331484 A1 | 19-07-1999 |
| | | | SK | 10999 A3 | 12-07-1999 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**

EP 04 25 7806

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2005

| Patent document cited in search report | Publication date | Patent family member(s) | | Publication date |
|---|---|---|---|---|
| WO 9804149 A | | TR | 9900585 T2 | 21-06-1999 |
| | | ZA | 9706474 A | 22-01-1999 |
| | | EP | 0963162 A1 | 15-12-1999 |
| | | IN | 183717 A1 | 25-03-2000 |

EPO FORM P0459

For more details about this annex : see Official Journal of the European Patent Office, No. 12/82